(19) Europäisches Patentamt
European Patent Office
Office européen des brevets

(11) Veröffentlichungsnummer: 0 199 193
B1

(12) **EUROPÄISCHE PATENTSCHRIFT**

(45) Veröffentlichungstag der Patentschrift: **15.11.89**

(51) Int. Cl.⁴: **C 08 L 69/00**

(21) Anmeldenummer: **86104877.5**

(22) Anmeldetag: **09.04.86**

(54) **Thermoplastische Formmassen aus Polycarbonaten, Pfropfpolymerisaten und Copolymerisaten.**

(30) Priorität: **19.04.85 DE 3514185**

(43) Veröffentlichungstag der Anmeldung: **29.10.86 Patentblatt 86/44**

(45) Bekanntmachung des Hinweises auf die Patenterteilung: **15.11.89 Patentblatt 89/46**

(84) Benannte Vertragsstaaten: **DE FR GB IT NL**

(56) Entgegenhaltungen:
**EP-A-0 005 202**
**EP-A-0 080 767**
**EP-A-0 122 535**
**DE-A-3 332 325**
**GB-A-1 253 226**

(73) Patentinhaber: **BAYER AG, D-5090 Leverkusen 1 Bayerwerk (DE)**

(72) Erfinder: **Kress, Hans- Jürgen, Dr., Scheiblerstrasse 111, D-4150 Krefeld (DE)**
Erfinder: **Lindner, Christian, Dr., Riehlerstrasse 200, D-5000 Köln 60 (DE)**
Erfinder: **Morbitzer, Leo, Dr., Rungestrasse 50, D-5000 Köln 80 (DE)**
Erfinder: **Peters, Horst, Dr., Winterberg 25, D-5090 Leverkusen 3 (DE)**
Erfinder: **Ott, Karl- Heinz, Dr., Paul- Klee- Strasse 54, D-5090 Leverkusen (DE)**
Erfinder: **Schoeps, Jochen, Dr., Windmühlenstrasse 126, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 199 193 B1

LIBER, STOCKHOLM 1989

**Beschreibung**

Gegenstand der vorliegenden Erfindung sind thermoplastische Formmassen enthaltend

| | |
|---|---|
| A. | 20 bis 80 Gew.-Teile an aromatischen, thermoplastischen Polycarbonaten, |
| B. | 10 bis 60 Gew.-Teile an Pfropfpolymerisaten B.1 und/oder B.2, wobei |
| B.1 | durch Pfropfen von 5 bis 90 Teilen einer Mischung aus |
| B.1.1 | 30 bis 40 Gew.-%, vorzugsweise 34.5 Gew.-% α-Methylstyrol, 52 bis 62 Gew.-%, vorzugsweise 55,5 Gew.-% Methylmethacrylat und 4 bis 14 Gew.-%, vorzugsweise 10 Gew.-% Acrylnitril, wobei die Summe der Gewichtsprozente jeweils 100 beträgt, auf |
| B.1.2 | 95 bis 10 Gew.-Teile eines Kautschukes mit einer mittleren Teilchengröße von 0,09 - 5 µm und mit einer Glastemperatur $T_G \leqslant 10°C$, erhältlich ist, und wobei |
| B.2 | durch Pfropfen von 5 bis 90 Gew.-Teilen einer Mischung auf |
| B.2.1 | 50 bis 95 Gew-% Styrol, α-Methylstyrol, kernsubstituiertem Styrol, Methylmethacrylat oder Mischungen daraus, und |
| B.2.2 | 5 bis 50 Gew.-% (Meth)Acrylnitril, Methylmethacrylat, Maleinsäureanhydrid, N-substituiertem Maleinimid oder Mischungen daraus, auf |
| B.2.3 | 95 bis 10 Gew.-Teile eines Kautschuks mit einer mittleren Teilchengröße von 0,09 - 5 µm und mit einer Glastemperatur $T_G \leqslant 10°C$ erhältlich ist, und |
| C. | 10 bis 70 Gew.-Teile an thermoplastischen Copolymerisaten C.1 und/oder C.2, wobei |
| C.1 | durch Copolymerisation von 30 bis 40 Gew.-%, vorzugsweise 34,5 Gew.-% α-Methylstyrol, 52 bis 62 Gew.-%, vorzugsweise 55,5 Gew.-% Methylmethacrylat und 4 bis 14 Gew.-%, vorzugsweise 10 Gew.-% Acrylnitril, wobei die Summe der Gewichtsprozente wieder jeweils 100 beträgt, erhältlich ist, und wobei |
| C.2 | durch Copolymerisation von |
| C.2.1 | 50 bis 95 Gew.-% Styrol, α-Methylstyrol, kernsubstituiertem Styrol, Methylmethacrylat oder Mischungen daraus und |
| C.2.2 | 5 bis 50 Gew.-% (Meth)Acrylnitril, Methylmethacrylat, Maleinsäureanhydrid, N-substituiertem Maleinimid oder Mischungen daraus erhältlich ist, |

wobei
1. die Summe der Gewichtsteile A + B + C immer jeweils 100 ist,
2. bei gleichzeitigem Vorliegen von B.1 und B.2 das Gewichtsverhältnis von B.1 zu B.2 zwischen 50 : 50 und 95 : 5 liegt,
3. bei gleichzeitigem Vorliegen von C.1 und C.2 das Gewichtsverhältnis von C.1 zu C.2 auch zwischen 50 : 50 und 95 : 5 liegt, und
4. entweder B.1 oder C.1 oder B.1 und C.1 in der Formmasse vorliegen müssen.

Die erfindungsgemäßen Formmassen soweit sie A, B1 und C1 enthalten, haben nur ein einziges Thermoplast-Verlustmodulmaximum, was in einer wesentlich verbesserten Mischbarkeit der Komponenten gegenüber dem Stand der Technik resultiert.

Die erfindungsgemäßen Produkte besitzen eine sehr gleichmäßige Kautschukverteilung in der jeweiligen Abmischung, zeichnen sich durch sehr gute Zähigkeit, Thermostabilität und eine deutlich verbesserte Wärmeformbeständigkeit aus.

Abmischungen, die die Komponenten B.1 als Bestandteile enthalten, zeigen zusätzlich eine matte Oberfläche.

Gemäß DE-AS-1 170 141 sind Mischungen aus 90 - 30 Gew.-% Polycarbonat und 10 - 70 Gew.-% eines Pfropfpolymerisats, das aus Polybutadien und einer Mischung aus Acrylnitril und Vinylkohlenwasserstoffen hergestellt wird, bekannt.

Aus DE-AS-2 259 565 sind Polycarbonat/Pfropfpolymerisat/Copolymerisat (70 - 30 / 30 - 70 / 0 - 75 Gew.-%)-Mischungen bekannt, wobei die Pfropfpolymerisate durch Polymerisation von Styrol, Methylmethacrylat in Kombination mit Acrylnitril und/oder Methylmethacrylat auf einen Kautschuk und die Copolymerisate aus 95 - 50 % Styrol, α-Methylstyrol, Methacrylat oder Mischungen daraus und 5 - 50 % Acrylnitril, Methylmethacrylat oder Mischungen daraus hergestellt werden. Diese Zusammensetzungen besitzen eine verbesserte Fließnahtfestigkeit.

DOS-1 810 993 beschreibt PC/Pfropfpolymerisat/Copolymerisat-Mischungen, wobei die einzusetzende vinylaromatische Verbindung vorwiegend α-Methylstyrol ist. Solche Mischungen besitzen eine hohe Wärmeformbeständigkeit, jedoch eine schlechtere Kerbschlagzähigkeit als Styrol/Acrylnitril-Systeme.

In der EP-89 540 sind Polycarbonatabmischungen aus thermoplastischen Polycarbonaten, Polymerisaten von $C_1$-$C_4$-Alkylestern der Methacrylsäure und Methylmethacrylatgepfropftem Acrylsäurealkylester-Kautschuk beschrieben. Sie zeichnen sich durch hohe Alterungsbeständigkeit, Thermostabilität, gutem Rohton, hoher Kerbschlagzähigkeit und homogener Oberfläche aus.

Polycarbonatabmischungen mit Produkten, die aus mehr als zwei radikalisch polymerisierbaren Monomeren aufgebaut sind, sind z. B. beschrieben in JA-56/131 - 657, worin ein Pfropfpolymerisat aus Mischungen von Styrol, Vinyltoluol, Methylmethacrylat, Acrylnitril, Methylacrylat, Hydroxyethylacrylat oder Ethylmethacrylat

auf einem Dienkautschuk eingesetzt wird.

JA-57/185 - 340 beinhaltet Polycarbonatabmischungen, wobei das Copolymer aufgebaut ist aus 20 - 65 Gew.-% Methylmethacrylat, 20 - 60 Gew.-% α-Methylstyrol und 5 - 40 Gew.-% Acrylnitril. Die Produkte zeichnen sich durch hohe Temperaturstabilität, Zähigkeit und gute Verarbeitbarkeit aus.

JA-57/168 - 937 beschreibt Polycarbonatabmischungen, die als Copolymer ein Produkt aus aromatischen Vinylverbindungen, Cyangruppen-haltige Vinylverbindungen und Alkylester von ungesättigten Carboxylverbindungen sowie ein Pfropfpolymerisat aus diesen Monomeren auf Ethylen-Propylen-Kautschuk enthalten.

In JA-57/040 536 wird als Copolymer für eine Polycarbonat/Pfropfpolymer/Copolymer-Mischung ein Produkt aus 73 - 83 Gew.-% α-Methylstyrol, 17 bis 27 Gew.-% Acrylnitril und weniger als 10 Gew.-% Methylmethacrylat erwähnt.

Eine hitzebeständige, schlagzähe Polycarbonatmischung, die ein Copolymer aus α-Methylstyrol, Acrylnitril, Methacrylsäureester und/oder Styrol enthält, wird in JA-57/147 535 beschrieben.

Erfindungsgemäß geeignete, thermoplastische, aromatische Polycarbonate gemäß Komponente A sind solche auf Basis der Diphenole der Formel (I)

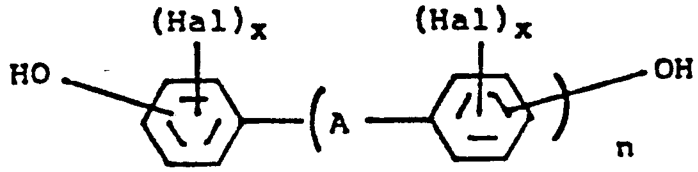

(I),

worin "A" eine Einfachbindung, ein $C_1$-$C_5$-Alkylen, ein $C_2$-$C_5$-Alkyliden, ein $C_5$-$C_6$-Cycloalkyliden, -S- oder -$SO_2$-, Hal, Chlor oder Brom, "x" 0, 1 oder 2 und "n" 1 oder null sind und gegebenenfalls der Formel (Ia)

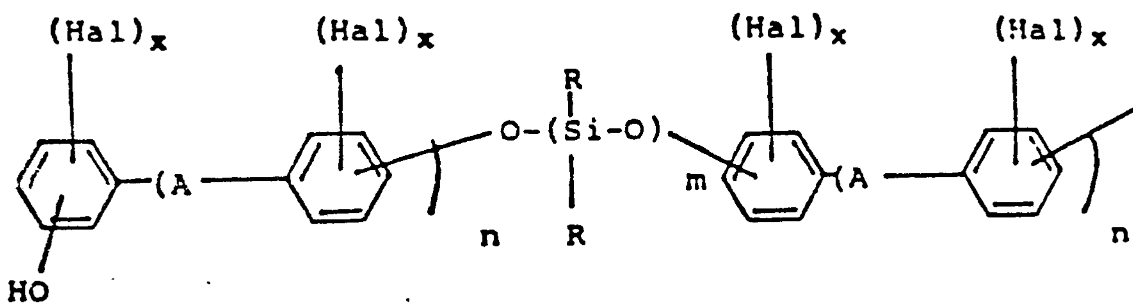

(Ia)

worin "A", Hal, "x" und "n" die für Formel (I) genannte Bedeutung haben, und die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und "m" eine ganze Zahl zwischen 5 und 100, vorzugsweise zwischen 20 und 80, ist.

Erfindungsgemäß geeignete Polycarbonate gemäß Komponente A sind sowohl Homopolycarbonate als auch Copolycarbonate, wobei die Diphenole der Formel (Ia) nur für die Herstellung von Copolycarbonaten mit den Diphenolen der Formel (I) eingesetzt werden, wobei der Gewichtsanteil an Diphenolen der Formel (Ia) in den Copolycarbonaten jeweils zwischen 1 und 20 Gew.-%, vorzugsweise zwischen 1,5 und 15 Gew.-% und insbesondere zwischen 2 und 10 Gew.-%, bezogen jeweils auf die Gewichtssumme der eingesetzten Diphenole der Formel (I) und (Ia) liegt.

Die Diphenole der Formel (I) sind entweder literaturbekannt oder nach literaturbekannten Verfahren herstellbar; Polydiorganosiloxane mit Hydroxy-aryloxy-Endgruppen gemäß Formel (Ia) sind ebenfalls bekannt (siehe beispielsweise US-Patent 3 419 634) beziehungsweise nach literaturbekannten Verfahren herstellbar.

Die Herstellung der erfindungsgemäß geeigneten Polycarbonate gemäß Komponente A ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich Polydiorganosiloxanhaltigen Polycarbonaten siehe beispielsweise DE-OS-3 334 782.)

Geeignete Kettenabbrecher sind beispielsweise Phenol, p-Chlorphenol, p-tert.-Butylphenol oder 2,4,6-Tribromphenol, aber auch langkettige Alkylphenole wie 4-(1,3-Tetra-methyl-butyl)-phenol, gemäß DE-OS-2 842 005 oder Monoalkylphenole oder Dialkylphenole mit insgesamt 8 bis 20 C-Atomen in den Alkylsubstituenten gemäß deutscher Patentanmeldung P-3 506 472.2 (Le A-23 654), wie beispielsweise p-Nonylphenol, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Die erfindungsgemäß geeigneten Polycarbonate gemäß Komponente A haben im allgemeinen mittlere Gewichtsmittelmolekulargewichte (Mw, gemessen beispielsweise durch Ultrazentrifugation oder Streulichtmessung) von 10 000 bis 200 000, vorzugsweise von 20 000 bis 80 000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (Ia) sind solche in denen R Methyl, Ethyl, Propyl, n-Butyl, tert.-Butyl und Phenyl ist.

Bevorzugte Diphenole der Formel (Ia) sind die der Formel (Ib)

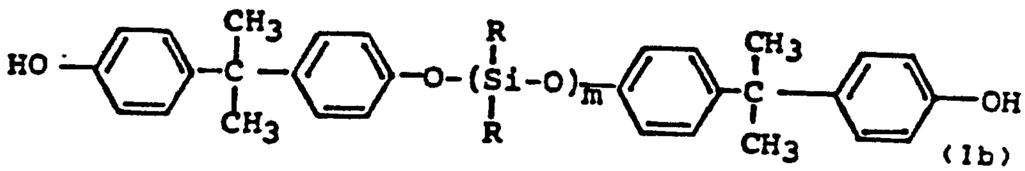

(Ib)

worin die R's gleich sind und die vorstehend genannte Bedeutung haben, also Methyl etc. und Phenyl bedeuten und "m" wiederum eine ganze Zahl zwischen 5 und 100, vorzugsweise zwischen 20 und 80, ist.

Die Herstellung der Diphenole der Formel (Ia) kann beispielsweise aus den entsprechenden Bis-chlorverbindungen (II)

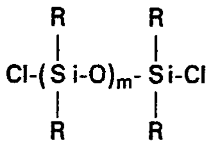

(II)

und den Diphenolen (I) beispielsweise gemäß US-Patent 3 419 634, Spalte 3 in Kombination mit US-Patent 3 182 662 erfolgen.

In den Bis-chlorverbindungen (II) haben R und "m" die Bedeutung wie in den Diphenolen (Ia) bzw. (Ib).

Die erfindungsgemäß geeigneten Polycarbonate gemäß Komponente A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolycarbonat die Copolycarbonate von Bisphenol A mit bis zu 15 Mol-%, bezogen auf die Molsumme an Diphenolen, an 2,2-Bis-(3,5-dibrom-4-hydroxyphenyl)-propan oder die Copolycarbonate der Diphenole der Formel (I) mit 1 bis 20 Gew.-% an Diphenolen der Formel (Ia), vorzugsweise der Formel (Ib), bezogen auf die Gewichtssumme der Diphenole (I) und (Ia), bzw. (I) und (Ib).

Zur Herstellung der Pfropfpolymerisate gemäß Komponente B geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_6$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender, ethylenisch ungesättigter Monomerer enthalten. Solche Vernetzer sind zum Beispiel Alkylendioldi(meth)-acrylate, Polyesterdi-(meth)-acrylate, Divinylbenzol, Tri-Vinylbenzol, Triallylcyanurat, Allyl-(meth)-acrylat, Butadien oder Isopren. Solche Alkylacrylatkautschuke sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril als Kern enthalten. Andere geeignete Kautschuke sind zum Beispiel EPDM-Kautschuke, also Kautschuke aus Ethylen, Propylen und einem unkonjugierten Dienmonomer.

Bevorzugte Kautschuke zur Herstellung der Pfropfpolymerisate B.1 und B.2 sind Dienmonomer- und Alkylacrylatkautschuke.

Die Kautschuke liegen in den Pfropfpolymerisaten B.1 und B.2 als wenigstens partiell vernetzte Teilchen einer mittleren Teilchengröße von 0,09 bis 5 µm, insbesondere von 0,1 bis 1 µm vor. Die Pfropfpolymerisate B werden durch radikalische Pfropfcopolymerisation der eingangs definierten Monomerengemische B.1.1 bzw. B.2.1 und B.2.2 in Gegenwart der zu pfropfenden Kautschuke B.1.2 bzw. B.2.3 hergestellt und sind durchweg bekannt. Bevorzugte Herstellungsverfahren für die Pfropfpolymeriste B sind Emulsions-, Lösungs-, Masse- oder Suspensionspolymerisation. Besonders bevorzugte Pfropfpolymerisate B.2 sind die sogenannten ABS-Polymerisate. Als kernsubstituiertes Styrol sei p-Methylstyrol und Halogenstyrol genannt.

Bevorzugte Copolymerisate gemäß Komponente C.2 sind solche aus wenigstens einem Monomeren aus der Reihe Styrol, α-Methylstyrol, kernalkyliertem Styrol, Halogenstyrol gemäß C.2.1 mit wenigstens einem Monomeren aus der Reihe Acrylnitril, Methacrylnitril, Methylmethacrylat, Maleinsäureanhydrid gemäß C.2.2.

Copolymerisate gemäß Komponenten C.1. und C.2 entstehen häufig bei der Pfropfpolymerisation zur Herstellung der Komponenten B.1 und B.2 als Nebenprodukte, besonders dann, wenn große Mengen Monomere auf kleine Mengen Kautschuk gepfropft werden.

Die erfindungsgemäß einzusetzende Menge an Copolymerisaten C von 10 bis 70 Gew.-Teilen, bezogen auf 100 Gew.-Teile A + B + C, bezieht diese Nebenprodukte der Pfropfpolymerisation nicht mit ein.

Die Copolymerisate gemäß Komponente C sind harzartig, thermoplastisch und kautschukfrei.

Besonders bevorzugte Copolymerisate C.1. sind solche aus 34,5 Gew.-% α-Methylstyrol, 55,5 Gew.-% Methylmethacrylat und 10 Gew.-% Acrylnitril.

Besonders bevorzugte Copolymerisate C.2 sind solche aus Styrol mit Acrylnitril und gegebenenfalls mit Methylmethacrylat. Besonders bevorzugte Gewichtsverhältnisse im thermoplastischen Copolymerisat C.2 sind 60 bis 80 Gew.-% C.2.1 und 40 bis 20 Gew.-% C.2.2.

Die Copolymerisate gemäß Komponenten C.1 und C.2 sind bekannt und lassen sich durch radikalische Polymerisation, insbesondere durch Emulsions-, Suspension-, Lösungs- oder Massepolymerisation herstellen. Die Copolymerisate gemäß Komponenten C.1 und C.2 besitzen vorzugsweise Molekulargewichte Mw (Gewichtsmittel, ermittelt durch Lichtstreuung oder Sedimentation) zwischen 15 000 und 200 000.

Die erfindungsgemäßen Formmassen können weitere für Polycarbonat/Pfropfpolymerisat/Copolymerisat-Formmassen bekannte Zusätze, wie Stabilisatoren, Pigmente, Fließmittel, Flammschutzmittel, Entformungsmittel und/oder Antistatika in den üblichen Mengen enthalten.

Die erfindungsgemäßen Formmassen enthaltend die Komponenten A, B, C und gegebenenfalls weitere bekannte Zusätze, wie Stabilisatoren, Pigmente, Fließmittel, Flammschutzmittel, Entformungsmittel und/oder Antistatika werden hergestellt, indem man die jeweiligen Bestandteile in bekannter Weise vermischt und dann bei Temperaturen von 200°C bis 330°C in üblichen Aggregaten wie Innenknetern, Extrudern oder Doppelwellenschnecken schmelzcompoundiert oder schmelzextrudiert.

Gegenstand der vorliegenden Erfindung ist somit auch ein Verfahren zur Herstellung von thermoplastischen Formmassen enthaltend die Komponenten A, B, C und gegebenenfalls Stabilisatoren, Pigmente, Fließmittel, Flammschutzmittel, Entformungsmittel und/oder Antistatika, das dadurch gekennzeichnet ist, daß man die Komponenten A, B, C und gegebenenfalls Stabilisatoren, Pigmente, Fließmittel, Flammschutzmittel, Entformungsmittel und/oder Antistatika in bekannter Weise vermischt und dann bei Temperaturen von 200°C bis 330°C in üblichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind:

Gehäuseteile jeder Art (z. B. für Haushaltsgeräte wie Saftpressen, Kaffeemaschinen; Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten und Folien.

Teilchengröße bedeutet immer mittlerer Teilchendurchmesser $d_{50}$, ermittelt durch Ultrazentrifugenmessungen nach W. Scholtan et al., Kolloid-Z u. Z. Polymere 250 (1972) 782 - 796.

Die Bestimmung des Siloxangehaltes im Polydiorganosiloxan-Polycarbonat-Blockcopolymeren, d.h. des Anteils der Dimethylsiloxy-Einheiten in Gew.-%, bezogen auf das Gesamtgewicht des Blockcopolymeren, erfolgte gravimetrisch und durch Kernresonanzspektrometrie. Als mittlere Siloxanblocklänge wird der durch Bestimmung der Endgruppe am Siloxan-Prepolymer (Formel Ia) ermittelte Polymerisationsgrad $\bar{P}n$ angegeben.

**Beispiele**

Eingesetzte Polykondensate und Polymerisate:

A.a

Polycarbonate aus 2,2-Bis-(4-hydroxyphenyl)-propan (Bisphenol A) mit einer relativen Lösungsviskosität von 1,26 - 1,28) gemessen in Methylenchlorid bei 25°C und einer Konzentration von 0,5 Gew.-%.

A.b

Copolycarbonat auf Basis von Bisphenol A und 5 Gew.-% Polydimethylsiloxan der Blocklänge ($P_n$) 40, mit einer relativen Lösungsviskosität von 1,31, gemessen in $CH_2Cl_2$ bei 25°C und einer Konzentration von 0,5 g / 100 ml.

B.1.a

Ein Pfropfpolymerisat aus 50 Gew.-% einer Monomermischung aus 34,5 Gew.-% α-Methylstyrol, 55,5 Gew.-% Methylmethacrylat und 10 Gew.-% Acrylnitril auf 50 Gew.-% eines teilchenförmigen Polybutadiens einer mittleren Teilchengröße ($d_{50}$) von 0,4 µm, erhalten durch Emulsionspolymerisation.

B.1.b
Ein Pfropfpolymerisat aus 50 Gew.-% einer Monomerenmischung aus 34,5 Gew.-% α-Methylstyrol, 55,5 % Methylmethacrylat und 10 Gew.-% Acrylnitril auf 50 Gew.-% eines teilchenförmigen Polybutadiens einer mittleren Teilchengröße ($d_{50}$) von 0,1 µm, erhalten durch Emulsionspolymerisation.

B.2
Styrol/Acrylnitril-Pfropfpolymerisat von 50 Gew.-% Styrol/Acrylnitril-Gemisch (im Gew.-Verhältnis von 72 : 28) auf 50 % teilchenförmiges Polybutadien einer mittleren Teilchengröße ($d_{50}$) von 0,4 µm, erhalten durch Emulsionspolymerisation.

C.1
Ein thermoplastisches Copolymerisat aus 34,5 α-Methylstyrol, 55,5 Gew.-% Methylmethacrylat und 10 Gew.-% Acrylnitril, mit einer Grenzviskosität von [η] = 0,56 dl/g (Messung in Dimethylformamid bei 25° C), hergestellt durch Emulsionspolymerisation.

C.2
Styrol-Acrylnitril-Copolymerisat mit einer Styrol/Acrylnitril-Verhältnis von 72 : 28 und einer Grenzviskosität von [η] 0,55 dl/g (Messung in Dimethylformamid bei 20° C).

Die Bestimmung der Wärmeformbeständigkeit nach Vicat erfolgte gemäß DIN 53 460.

Die Bestimmung der Kerbschlagzähigkeit nach Izod erfolgte an Stäben der Abmessung 2,5 x 1/2 x 1/8" gemäß ASTM-D-256. Die Bestimmung der Thermostabilität erfolgte über die Izod-Kerbschlagzähigkeit gemäß ASTM-D-256 an bei 300° C über Spritzguß hergestellten Prüfkörpern.

Die Bestimmung der Oberflächenbeschaffenheit erfolgte visuell an Spritzkörpern (Musterplatten der Größe 60 x 40 x 2 mm), die bei einer Spritztemperatur von 280° C hergestellt wurden.

Die Herstellung der Formmassen erfolgte auf einem 1,3-l-Innenkneter bei einer Temperatur von 200 - 220° C. Die Prüfkörper wurden durch Spritzguß bei, wenn nicht anders vermerkt, 260° C hergestellt.

Die erfindungsgemäßen Beispiele zeigen, daß durch Verwendung der erfindungsgemäßen Pfropfpolymerisate B.1 und/oder der erfindungsgemäßen Copolymerisate C.1 Abmischungen erhalten werden, die neben einer ausgezeichneten Zähigkeit, auch bei Herstelltemperaturen von 300° C, eine deutlich gegenüber dem Stand der Technik erhöhte Wärmeformbeständigkeit besitzen. Der Einsatz der erfindungsgemäßen Pfropfpolymerisate B.1 führt obendrein zu Formkörpern, die eine matte Oberfläche besitzen.

| | A.a % | A.b % | B.1.a % | B.1.b % | C.1 % | C.2 % | B.2 % | $a_k$-Izod* (260° C) J/m | $a_k$-Izod* (300° C) J/m | Vicat $B_{120}$ °C | Oberflächenbeschaffenheit |
|---|---|---|---|---|---|---|---|---|---|---|---|
| erfindungsgemäße Versuche | | | | | | | | | | | |
| 1. | 60 | | 24 | | 16 | | | 455 | 357 | 124 | matt |
| 2. | 60 | | 24 | | | 16 | | 622 | 489 | 122 | matt |
| 3. | 60 | | | 24 | | 16 | | 580 | 425 | 123 | matt |
| 4. | 60 | | | | 16 | | 24 | 517 | 329 | 122 | glänzend |
| 5. | 60 | | | | 24 | | 16 | 489 | 356 | 124 | glänzend |
| 6. | | 60 | 24 | | 16 | | | 457 | 275 | 128 | matt |
| Vergleichsversuch: | | | | | | | | | | | |
| 7. | 60 | | | | | 16 | 24 | 564 | 459 | 116 | glänzend |
| 8. | | 60 | | | | 16 | 24 | 599 | 423 | 116 | glänzend |

*) gemessen bei Raumtemperatur

In den Figuren 1 und 3 sind die Schubmodulkurven der Vergleichsversuche 7 und 8 und in den Figuren 2 und 4 die der erfindungsgemäßen Versuche 1 und 6 gezeigt. Gegenüber dem Stand der Technik besitzen die erfindungsgemäßen Mischungen nur ein einziges Thermoplastenverlustmodulmaximum im Bereich oberhalb 100° C. Dies läßt auf eine deutlich bessere Mischbarkeit der erfindungsgemäßen Komponenten schließen.

Die Schubmodulkurven wurden mit einem Rheometrics Dynamic (RDS 7700) erhalten. Dieses Gerät arbeitet mit einer erzwungenen Torsionsschwingung mit einer Frequenz von 1 Hz. (G' stellt den Speicher, G'' den Verlustmodul dar.) Als Prüfkörper wurde ein NKS-Stab, hergestellt bei 260° C durch Spritzguß, eingesetzt.

Die Figur 5 und die Figuren 6 - 9 zeigen elektronenmikroskopische Aufnahmen von Ultradünnschnitten ($OsO_4$-kontrastiert) des Vergleichsversuches 7 sowie der erfindungsgemäßen Versuche 1 bis 4. Die Vergrößerungen sind jeweils 7500 : 1 im oberen Bild und 25000 : 1 im unteren Bild der Figuren. Aus den Figuren geht klar hervor, daß durch Verwendung der erfindungsgemäßen Produkte B.1.a, B.1.b und/oder C.1 gegenüber dem Stand der

Technik eine deutlich gleichmäßigere Verteilung des Pfropfkautschuks in der Mischung erreicht wird, was ebenfalls eine verbesserte Mischbarkeit der erfindungsgemäßen Systeme belegt.

**Patentansprüche**

1. Thermoplastische Formmassen, enthaltend

A. 20 bis 80 Gew.-Teile eines aromatischen, thermoplastischen Polycarbonats auf Basis der Diphenole der Formel (I)

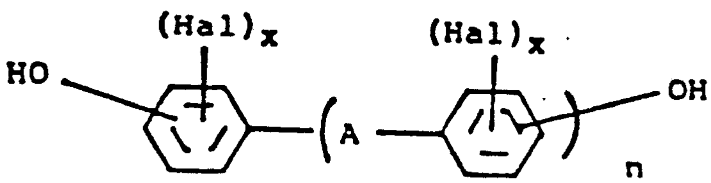

(I)

worin "A" eine Einfachbindung, ein $C_1$-$C_5$-Alkylen, ein $C_2$-$C_5$-Alkyliden, ein $C_5$-$C_6$-Cycloalkyliden, -S- oder -$SO_2$-, Hal, Chlor oder Brom, "x" 0, 1 oder 2 und "n" 1 oder null sind,

B. 10 bis 60 Gew.-Teile an Pfropfpolymerisaten B.1 und/oder B.2, wobei

B.1 durch Pfropfen von 5 bis 90 Teilen einer Mischung aus

B.1.1 30 bis 40 Gew.-% α-Methylstyrol, 52 bis 62 Gew.-% Methylmethacrylat und 4 bis 14 Gew.-% Acrylnitril, wobei die Summe der Gewichtsprozente jeweils 100 beträgt, auf

B.1.2 95 bis 10 Gew.-Teile eines Kautschukes mit einer mittleren Teilchengröße von 0,09 - 5 µm und mit einer Glastemperatur $T_G \leqslant 10°C$, erhältlich ist, und wobei

B.2 durch Pfropfen von 5 bis 90 Gew.-Teilen einer Mischung aus

B.2.1 50 bis 95 Gew.-% Styrol, α-Methylstyrol, kernsubstituiertem Styrol, Methylmethacrylat oder Mischungen daraus, und

B.2.2 5 bis 50 Gew.-% (Meth)Acrylnitril, Methylmethacrylat, Maleinsäureanhydrid, N-substituiertem Maleinimid oder Mischungen daraus, auf

B.2.3 95 bis 10 Gew.-Teile eines Kautschuks mit einer mittleren Teilchengröße von 0,09 - 5 µm und mit einer Glastemperatur $T_G \leqslant 10°C$ erhältlich ist, und

C. 10 bis 70 Gew.-Teile an thermoplastischen Copolymerisaten C.1 und/oder C.2, wobei

C.1 durch Copolymerisation von 30 bis 40 Gew.-% α-Methylstyrol, 52 bis 62 Gew.-% Methylmethacrylat und 4 bis 14 Gew.-% Acrylnitril, wobei die Summe der Gewichtsprozente wieder jeweils 100 beträgt, erhältlich ist, und wobei

C.2 durch Copolymerisation von

C.2.1 50 bis 95 Gew.-% Styrol, α-Methylstyrol, kernsubstituiertem Styrol, Methylmethacrylat oder Mischungen daraus und

C.2.2 5 bis 50 Gew.-% (Meth)Acrylnitril, Methylmethacrylat, Maleinsäureanhydrid, N-substituiertem Maleinimid oder Mischungen daraus erhältlich ist,

wobei

1. die Summe der Gewichtsteile A + B + C immer jeweils 100 ist,
2. bei gleichzeitigem Vorliegen von B.1 und B.2 das Gewichtsverhältnis von B.1 zu B.2 zwischen 50 : 50 und 95: 5 liegt,
3. bei gleichzeitigem Vorliegen von C.1 und C.2 das Gewichtsverhältnis von C.1 zu C.2 auch zwischen 50 : 50 und 95 : 5 liegt, und
4. entweder B.1 oder C.1 oder B.1 und C.1 in der Formmasse vorliegen müssen.

2. Formmassen gemäß Anspruch 1, dadurch gekennzeichnet, daß

B.1 durch Pfropfen von 5 bis 90 Teilen einer Mischung aus

B.1.1 34,5 Gew.-% α-Methylstyrol, 55,5 Gew.-% Methylmethacrylat und 10 Gew.-% Acrylnitril auf B.1.2 erhältlich ist.

3. Formmassen gemäß Ansprüche 1 und 2, dadurch gekennzeichnet, daß

C.1 durch Copolymerisation von 34,5 Gew.-% α-Methylstyrol, 55,5 Gew.-% Methylmethacrylat und 10 Gew.-% Acrylnitril erhältlich ist.

4. Formmassen gemäß Ansprüche 1 bis 3, dadurch gekennzeichnet, daß das aromatische, thermoplastische Polycarbonat ein Copolycarbonat ist, das zwischen 1 und 20 Gew.-%, bezogen auf die Gewichtssumme der eingesetzten Diphenole der Formeln (I) und (Ia), Diphenole der Formel (Ia) eingebaut enthält,

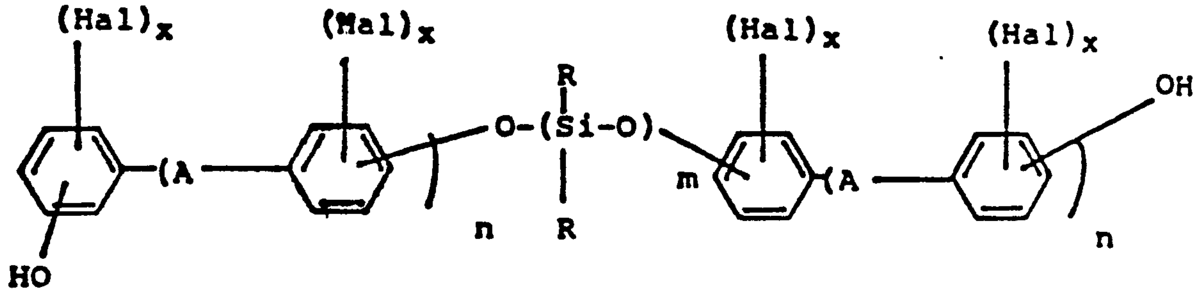

(Ia)

worin "A", Hal, "x" und "n" die für Formel (I) im Anspruch 1 genannte Bedeutung haben, und worin die R's gleich oder verschieden sind und ein lineares $C_1$-$C_{20}$-Alkyl, verzweigtes $C_3$-$C_{20}$-Alkyl oder $C_6$-$C_{20}$-Aryl sind und "m" eine ganze Zahl zwischen 5 und 100 ist.

5. Formmassen gemäß Anspruch 4, dadurch gekennzeichnet, daß das Copolycarbonat 1,5 bis 15 Gew.-% Diphenole der Formel (Ia) eingebaut enthält.

6. Formmassen gemäß Anspruch 5, dadurch gekennzeichnet, daß das Copolycarbonat 2 bis 10 Gew.-% Diphenole der Formel (Ia) eingebaut enthält.

7. Formmassen gemäß Ansprüche 1 bis 6, enthaltend zusätzlich mindestens einen Zusatz, ausgewählt aus der Gruppe der Stabilisatoren, Pigmente, Fließmittel, Flammschutzmittel, Entformungsmittel und Antistatika.

8. Verfahren zur Herstellung der Formmassen der Ansprüche 1 bis 6, dadurch gekennzeichnet, daß man die Komponenten A, B und C in bekannter Weise vermischt und dann bei Temperaturen von 200°C bis 330°C in üblichen Aggregaten schmelzcompoundiert oder schmelzextrudiert.

9. Verfahren gemäß Anspruch 8 zur Herstellung der Formmassen des Anspruchs 7, dadurch gekennzeichnet, daß man mindestens ein Zusatz ausgewählt aus der Gruppe der Stabilisatoren, Pigmente, Fließmittel, Flammschutzmittel, Entformungsmittel und Antistatika einbezieht.

**Claims**

1. Thermoplastic molding compounds containing

A. 20 to 80 parts by weight of an aromatic thermoplastic polycarbonate based on diphenols corresponding to formula (I)

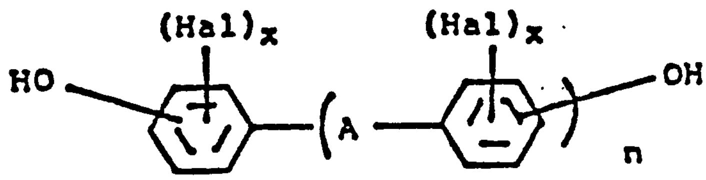

(I) .

in which "A" is a single bond, a $C_{1-5}$ alkylene, a $C_{2-5}$ alkylidene, a $C_{5-6}$ cycloalkylidene, -S- or -$SO_2$, Hal is chlorine or bromine, "x" is 0, 1 or 2 and "n" is 1 or 0,

B. 10 to 60 parts by weight of graft polymers B.1 and/or B.2,

B.1 being obtainable by grafting of 5 to 90 parts of a mixture of

B.1.1 30 to 40 % by weight α-methyl styrene, 52 to 62 % by weight methyl methacrylate and 4 to 14 % by weight acrylonitrile, the sum of the percentages by weight always being 100, onto

B.1.2 95 to 10 parts by weight of a rubber having a mean particle size of 0.09 to 5 µm and a glass temperature $T_G \leqslant 10°C$ and

B.2 being obtainable by grafting of 5 to 90 parts by weight of a mixture of

B.2.1 50 to 95 % by weight styrene, α-methyl styrene, nucleus-substituted styrene, methyl methacrylate or mixtures thereof and

B.2.2 5 to 50 % by weight (meth)acrylonitrile, methyl methacrylate, maleic anhydride, N-substituted maleic imide or mixtures thereof onto

B.2.3 95 to 10 parts by weight of a rubber having a mean particle size of 0.09 to 5 µm and a glass temperature $T_G$ of $\leqslant 10°C$, and

C. 10 to 70 parts by weight of thermoplastic copolymers C.1 and/or C.2,

C.1 being obtainable by copolymerization of 30 to 40 % by weight α-methyl styrene, 52 to 62 % by weight methyl methacrylate and 4 to 14 % by weight acrylonitrile, the sum of the percentages by weight always again always being 100, and

C.2 being obtainable by copolymerization of

C.2.1 50 to 95 % by weight styrene, α-methyl styrene, nucleus-substituted styrene, methyl methacrylate or mixtures thereof and

C.2.2 5 to 50 % by weight (meth)acrylonitrile, methyl methacrylate, maleic anhydride, N-substituted maleic imide or mixtures thereof,

1. the sum of the parts by weight of A + B + C always being 100,

2. where B.1 and B.2 are present at the same time, the ratio by weight of B.1 to B.2 being between 50 : 50 and 95 : 5,

3. where C.1 and C.2 are present at the same time, the ratio by weight of C.1 to C.2 also being between 50 : 50 and 95 : 5 and

4. either B.1 or C.1 or B.1 and C.1 having to be present in the molding compound.

2. Molding compounds as claimed in claim 1, characterized in that B.1 is obtainable by grafting of 5 to 90 parts by weight of a mixture of

B.1.1 34.5 % by weight α-methyl styrene, 55.5 % by weight methyl methacrylate and 10 % by weight acrylonitrile onto B.1.2.

3. Molding compounds as claimed in claims 1 and 2, characterized in that C.1 is obtainable by copolymerization of 34.5 % by weight α-methyl styrene, 55.5 % by weight methyl methacrylate and 10% by weight acrylonitrile.

4. Molding compounds as claimed in claims 1 to 3, characterized in that the aromatic thermoplastic polycarbonate is a copolycarbonate in which are incorporated between 1 and 20 % by weight, based on the total weight of the diphenols of formulae (I) and (Ia) used, of diphenols corresponding to formula (Ia)

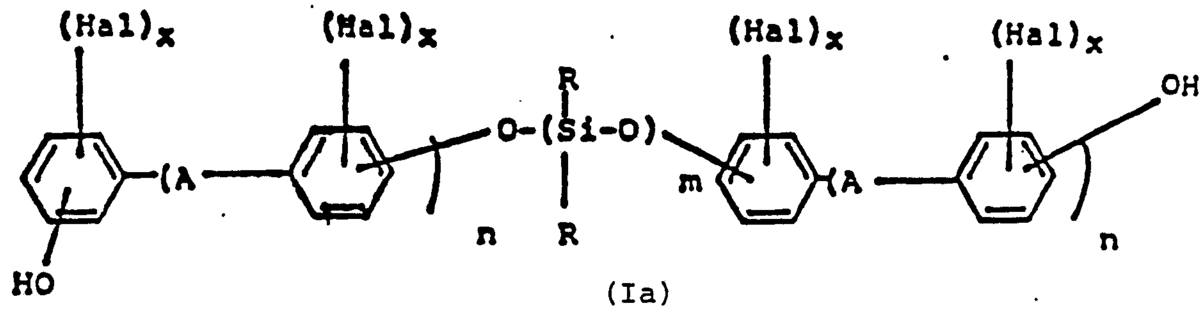

(Ia)

in which "A", Hal, "x" and "n" have the meanings defined for formula (I) in claim 1 and in the R's are the same or different and represent a linear $C_{1-20}$ alkyl, branched $C_{3-20}$ alkyl or $C_{6-20}$ aryl and "m" is an integer of from 5 to 100.

5. Molding compounds as claimed in claim 4, characterized in that 1.5 to 15 % by weight diphenols corresponding to formula (Ia) are incorporated in the copolycarbonate.

6. Molding compounds as claimed in claim 5, characterized in that 2 to 10 % by weight diphenols corresponding to formula (Ia) are incorporated in the copolycarbonate.

7. Molding compounds as claimed in claims 1 to 6 additionally containing at least one additive selected from the group consisting of stabilizers, pigments, flow aids, flameproofing agents, mold release agents and antistatic agents.

8. A process for the production of the molding compounds claimed in claim 1 to 6, characterized in that components A, B and C are mixed in known manner and the resulting mixture is melt-compounded or melt-extruded in standard units at temperatures of 200 to 330° C.

9. A process as claimed in claim 8 for the production of the molding compounds claimed in claim 7, characterized in that at least one additive from the group consisting of stabilizers, pigments, flow aids, flameproofing agents, mold release agents and antistatic agents is incorporated.

**Revendications**

1. Compositions à mouler thermoplastiques, contenant

A. 20 à 80 parties en poids d'un polycarbonate aromatique thermoplastique à base des diphénols de formule (I)

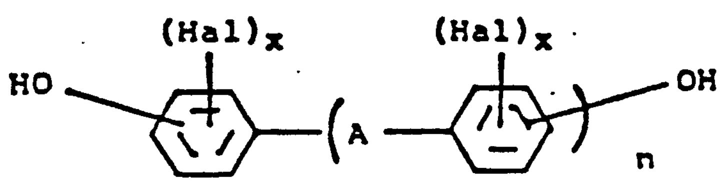

(I)

dans laquelle "A" est une liaison simple, un groupe alkylène en $C_1$ à $C_5$, un groupe alkylidène en $C_2$ à $C_5$, un groupe cycloalkylidène en $C_5$ ou $C_6$, -S- ou -$SO_2$, Hal désigne le chlore ou le brome, "x" a la valeur 0, 1 ou 2 et

"n" est égal à 1 ou zéro,

B. 10 à 60 parties en poids de polymérisats greffés B.1 et/ou B.2,

B.1 étant obtenu par greffage de 5 à 90 parties d'un mélange constitué de

B.1.1 30 à 40 % en poids d'α-méthylstyrène, 52 à 62 % en poids de méthacrylate de méthyle et 4 à 14 % en poids d'acrylonitrile, la somme des pourcentages en poids étant toujours égale à 100, sur

B.1.2 95 à 10 parties en poids d'un caoutchouc ayant un diamètre moyen des particules de 0,09 à 5 µm et une température $T_G$ de transition vitreuse inférieure ou égale à 10°C, et

B.2 pouvant être obtenu par greffage de 5 à 90 parties en poids d'un mélange de

B.2.1 50 à 95 % en poids de styrène, d'α-méthylstyrène, de styrène substitué sur le noyau, de méthacrylate de méthyle ou leurs mélanges et

B.2.2 5 à 50 % en poids de (méth)acrylonitrile, de méthacrylate de méthyle, d'anhydride d'acide maléique, de maléinimide N-substitué ou leurs mélanges, sur

B.2.3 95 à 10 parties en poids d'un caoutchouc ayant un diamètre moyen des particules de 0,09 à 5 µm et une température $T_G$ de transition vitreuse inférieure ou égale à 10°C, et

C. 10 à 70 parties en poids de copolymérisats thermoplastiques C.1 et/ou C.2,

C.1 pouvant être obtenus par copolymérisation de 30 à 40 % en poids d'α-méthylstyrène, 52 à 62 % en poids de méthacrylate de méthyle et 4 à 14 % en poids d'acrylonitrile, la somme des pourcentages en poids étant là encore toujours égale à 100, et

C.2 pouvant être obtenus par copolymérisation,

C.2.1 de 50 à 95 % en poids de styrène, d'α-méthylstyrène, de styrène substitué sur le noyau, de méthacrylate de méthyle ou leurs mélanges, et

C.2.2 de 5 à 50 % en poids de (méth)acrylonitrile, de méthacrylate de méthyle, d'anhydride d'acide maléique, de maléinimide substitué sur l'azote ou leurs mélanges,

cependant que

1. la somme des parties en poids de A + B + C est toujours égale à 100,

2. en la présence simultanée de B.1 et de B.2, le rapport en poids de B.1 à B.2 se situe entre 50 : 50 et 95 : 5,

3. en la présence simultanée de C.1 et de C.2, le rapport en poids de C.1 à C.2 se situe également entre 50 : 50 et 95 : 5, et

4. B.1 ou C.1, ou B.1 et C.1 doivent être présents dans la composition à mouler.

2. Compositions à mouler suivant la revendication 1, caractérisées en ce que

B.1 peut être obtenu par greffage de 5 à 90 parties d'un mélange de

B.1.1 34,5 % en poids d'α-méthylstyrène, 55,5 % en poids de méthacrylate de méthyle et 10 % en poids d'acrylonitrile sur B.1.2.

3. Compositions à mouler suivant les revendications 1 et 2, caractérisées en ce que

C.1 peut être obtenu par copolymérisation de 34,5 % en poids d'α-méthylstyrène, 55,5 % en poids de méthacrylate de méthyle et 10 % en poids d'acrylonitrile.

4. Compositions à mouler suivant les revendications 1 à 3, caractérisées en ce que le polycarbonate aromatique thermoplastique est un copolycarbonate qui contient une proportion incorporée comprise entre 1 et 20 % en poids, par rapport à la somme des poids des diphénols utilisés de formules (I) et (Ia), de diphénols de formule (Ia),

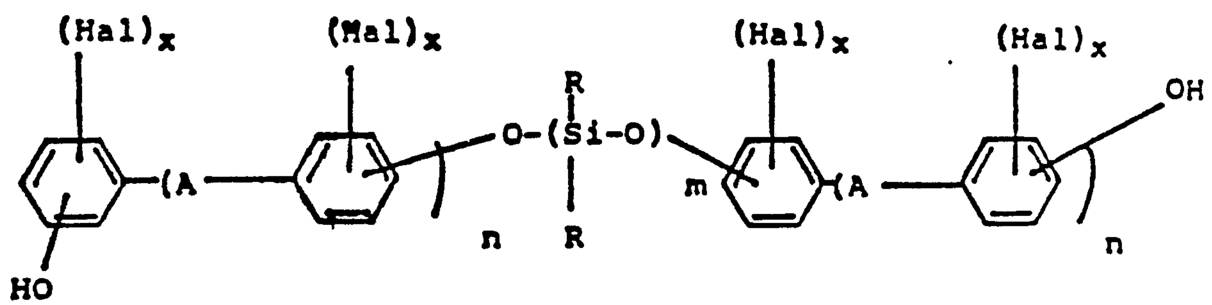

(Ia)

dans laquelle "A", Hal, "x" et "n" ont la définition mentionnée pour la formule (I) dans la revendication 1 et les groupes R sont identiques ou différents et représentent un groupe alkyle linéaire en $C_1$ à $C_{20}$, un groupe alkyle ramifié en $C_3$ à $C_{20}$ ou un groupe aryle en $C_6$ à $C_{20}$ et "m" est un nombre entier compris entre 5 et 100.

5. Compositions à mouler suivant la revendication 4, caractérisées en ce que le copolycarbonate contient une proportion incorporée de 1,5 à 15 % en poids de diphénols de formule (Ia).

6. Compositions à mouler suivant la revendication 5, caractérisées en ce que le copolycarbonate contient une proportion incorporée de 2 à 10 % en poids de diphénols de formule (Ia).

7. Compositions à mouler suivant les revendications 1 à 6, contenant en outre au moins un additif choisi dans le groupe comprenant des agents stabilisants, des pigments, des agents favorisant l'écoulement, des agents

d'ignifugeage, des agents de démoulage et des agents antistatiques.

8. Procédé de production des compositions à mouler suivant les revendications 1 à 6, caractérisé en ce qu'on mélange d'une manière connue les composants A, B et C, puis on formule ou on extrude le mélange à l'état fondu à des températures de 200 à 330° C dans des appareils classiques.

9. Procédé suivant la revendication 8, pour la production de compositions à mouler suivant la revendication 7, caractérisé en ce qu'on incorpore au moins un additif choisi dans le groupe comprenant des agents stabilisants, des pigments, des agents favorisant l'écoulement, des agents d'ignifugeage, des agents de démoulage et des agents antistatiques.

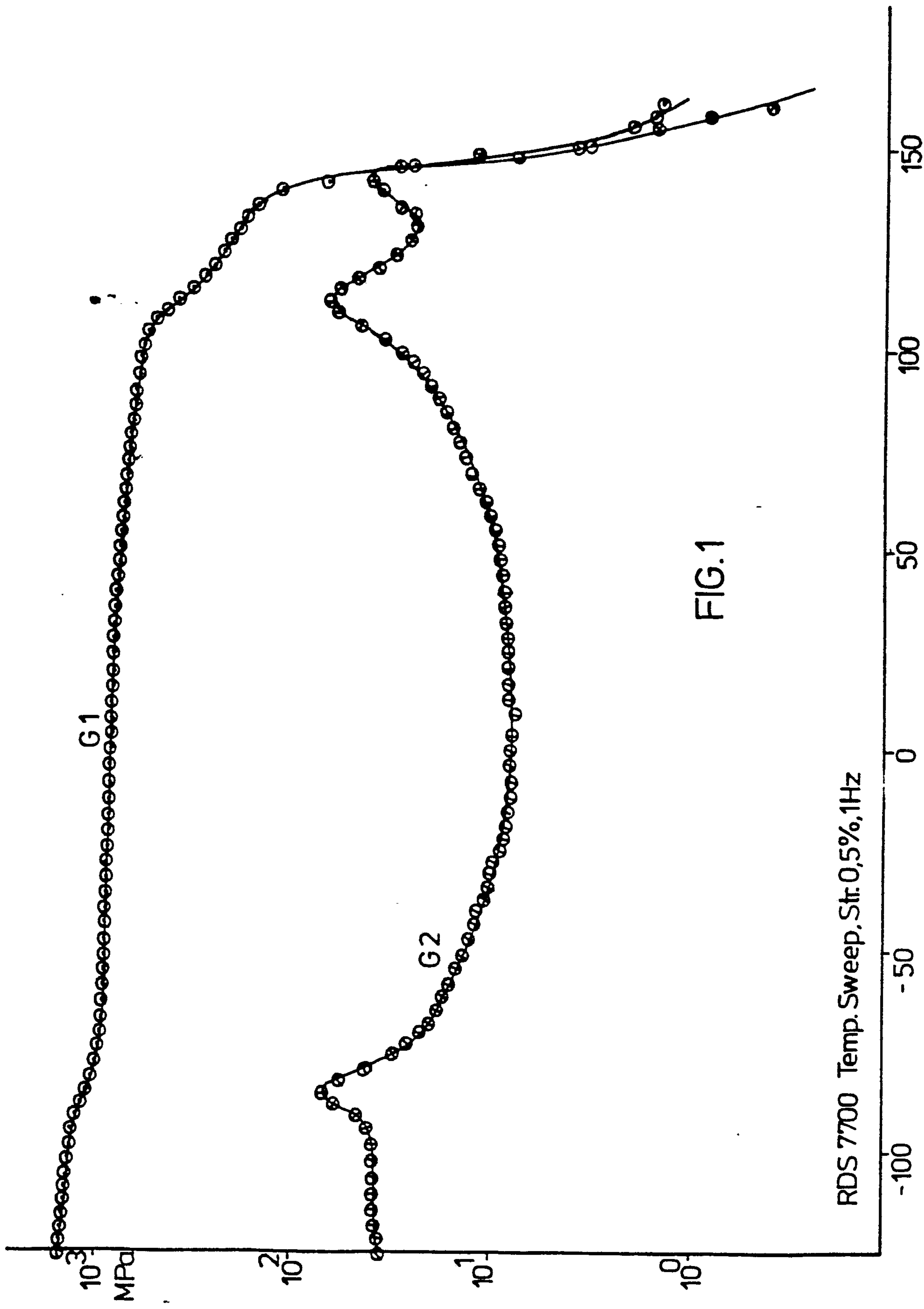
G1
G2
$10^3$ MPa
$10^2$
$10^1$
$10^0$
-100
-50
0
50
100
150
RDS 7700 Temp. Sweep, Str. 0,5%, 1Hz

FIG.1

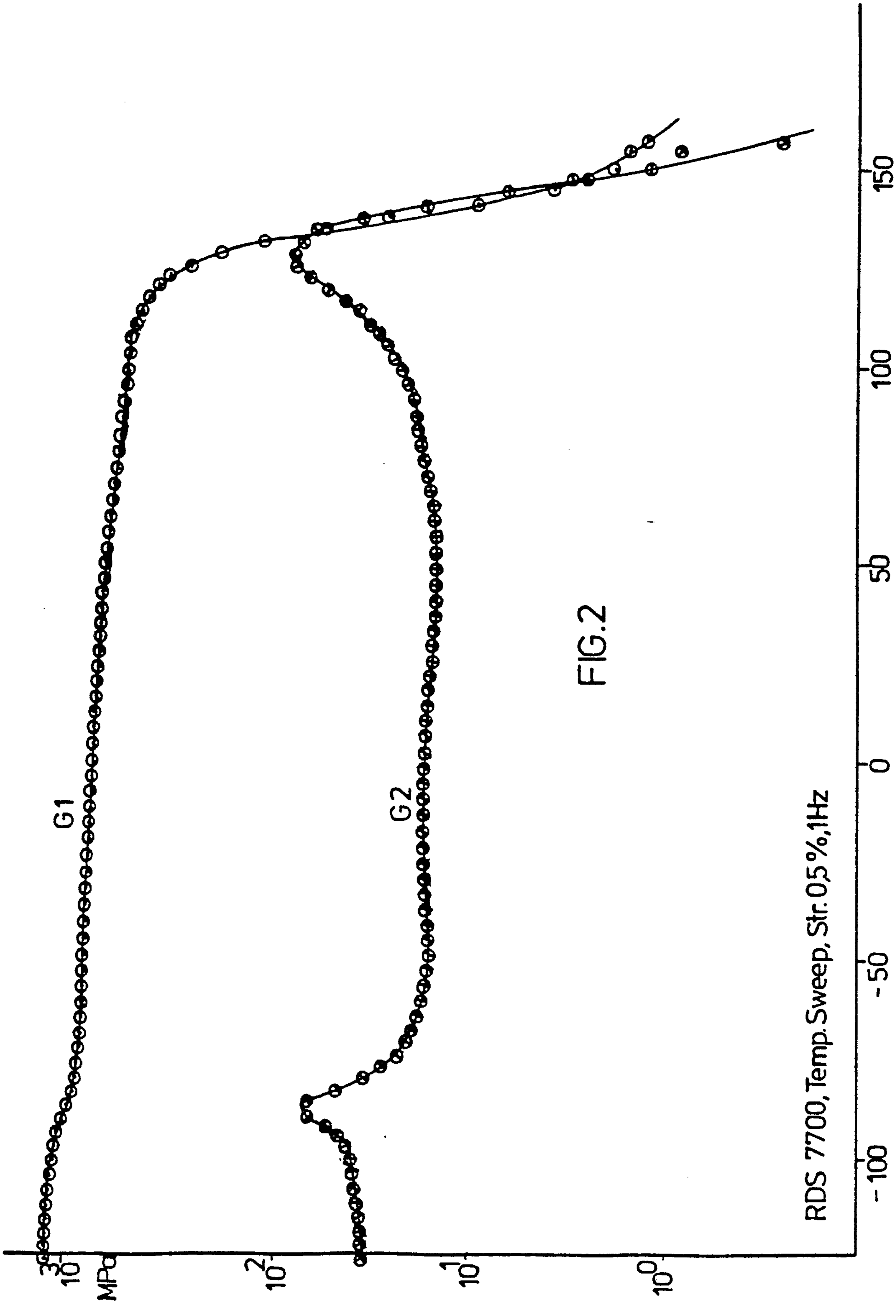
$10^3$
MPa
$10^2$
$10^1$
$10^0$
G1
G2
-100
-50
0
50
100
150
RDS 7700, Temp. Sweep, Str. 0,5 %, 1Hz

FIG.2

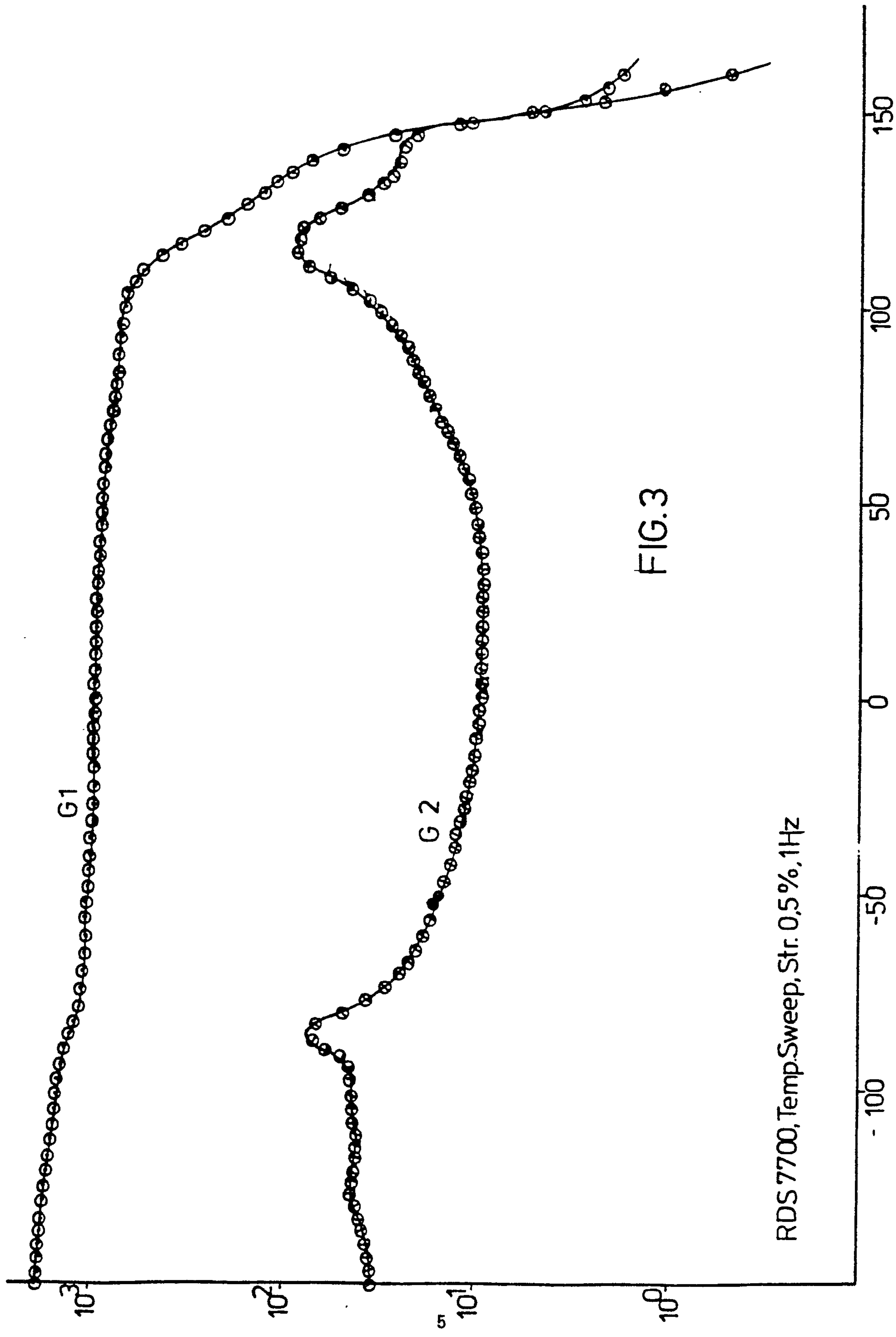

G1
G 2
$10^3$
$10^2$
$10^1$
$10^0$
-100
-50
0
50
100
150
RDS 7700, Temp.Sweep, Str. 0,5%, 1Hz


FIG. 3

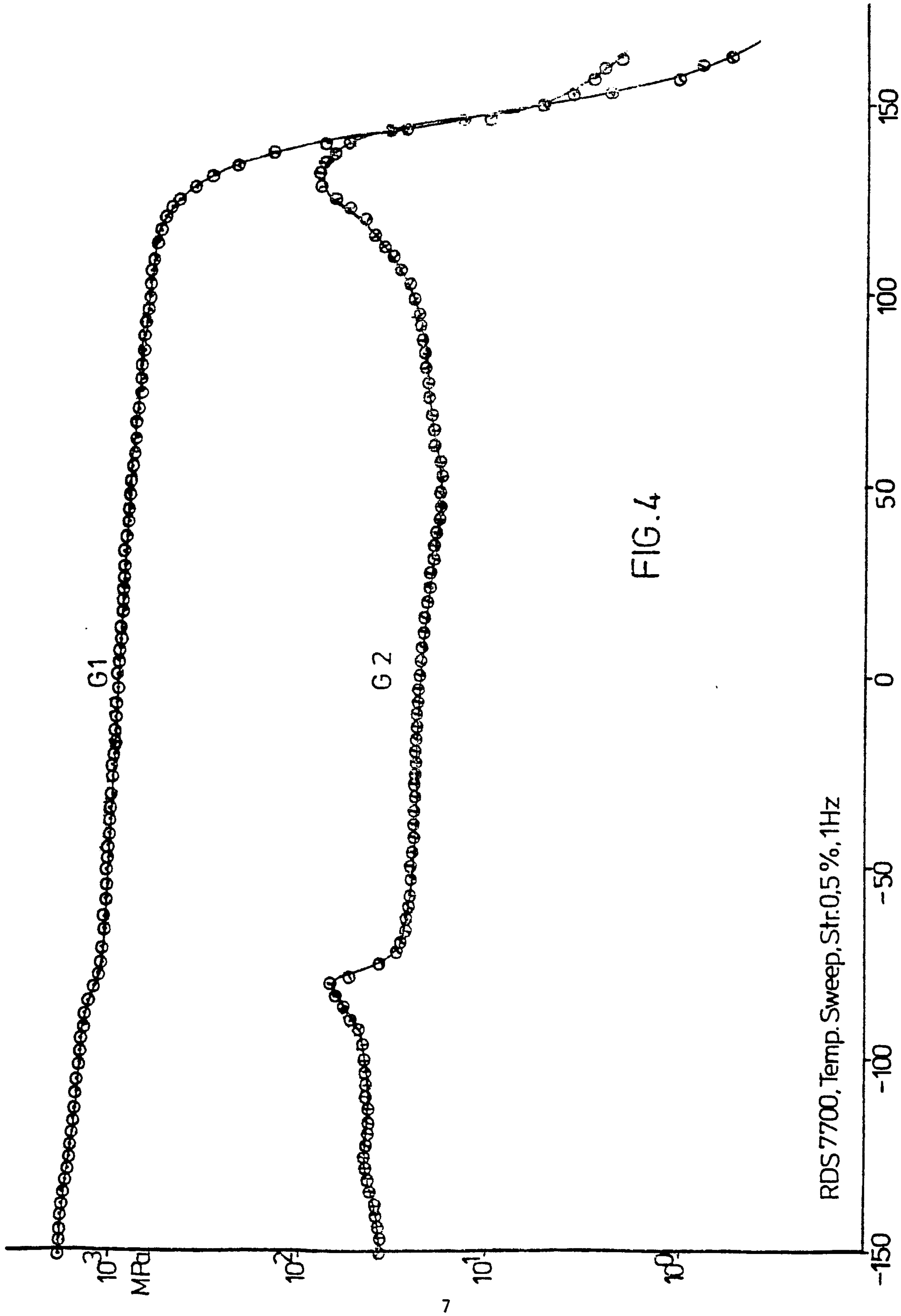
G1
G 2
RDS 7700, Temp. Sweep, Str. 0,5 %, 1Hz
$10^3$
MPa
$10^2$
$10^1$
$10^0$
-150
-100
-50
0
50
100
150

FIG. 4

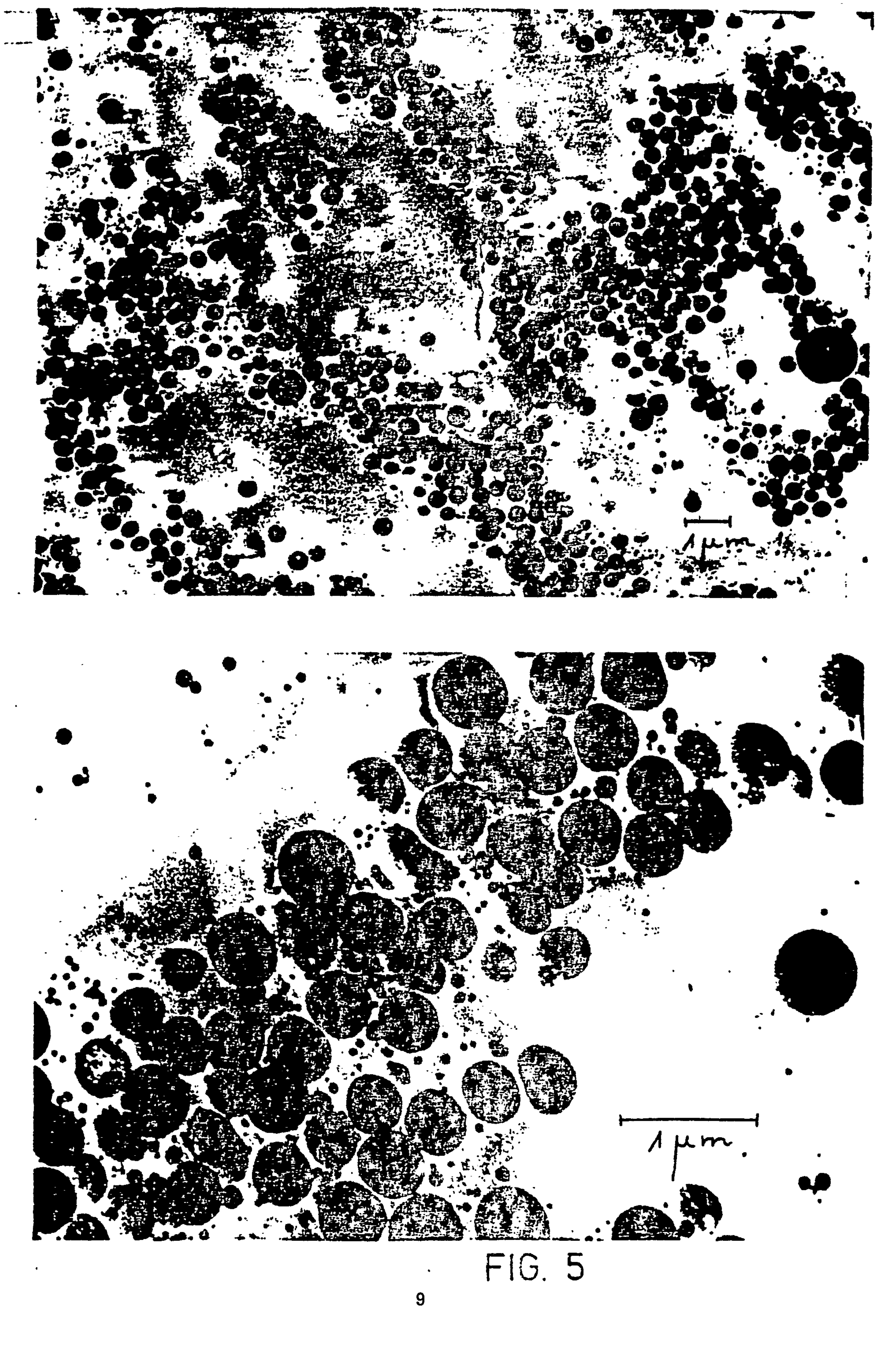


FIG. 5

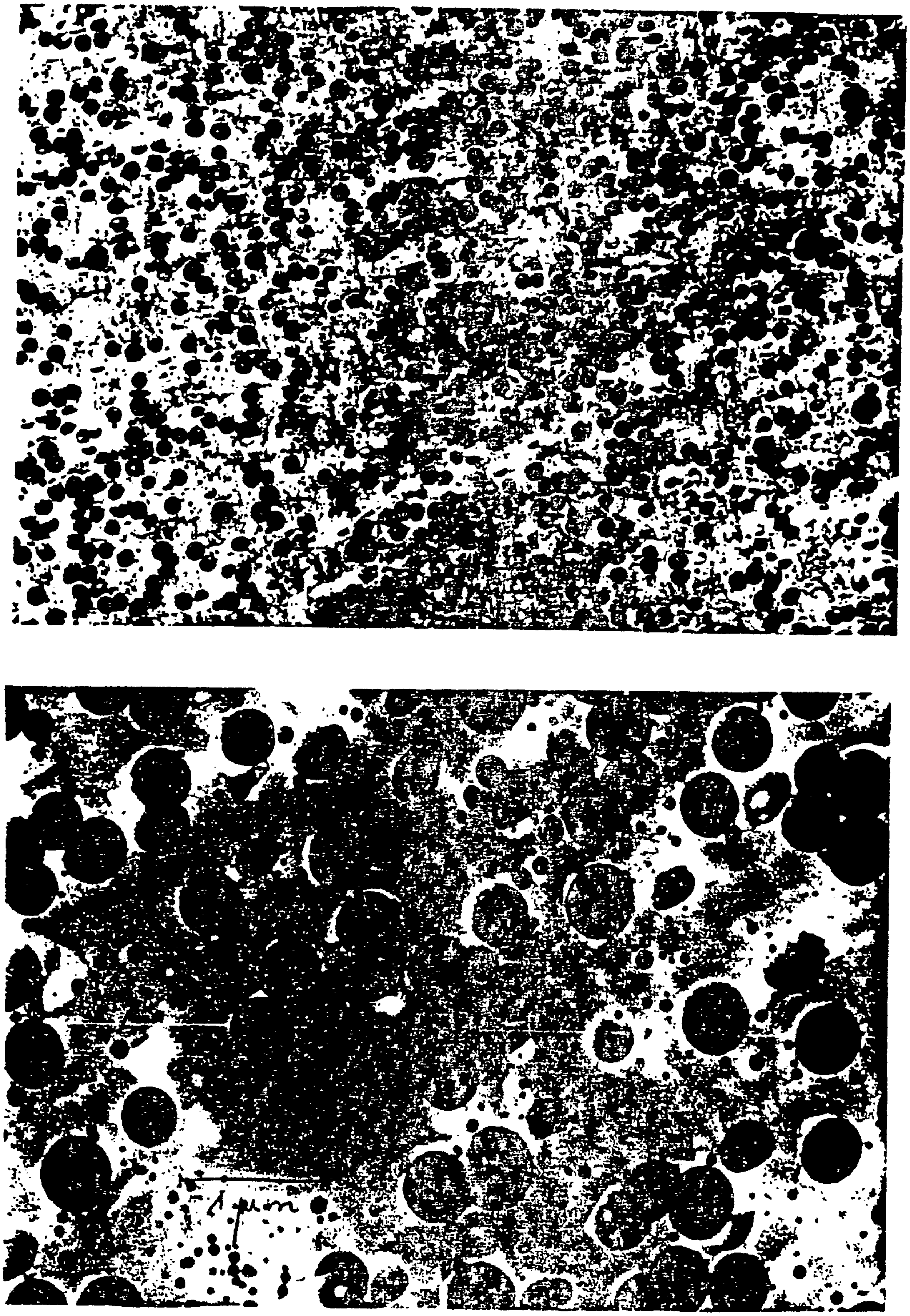


FIG. 6

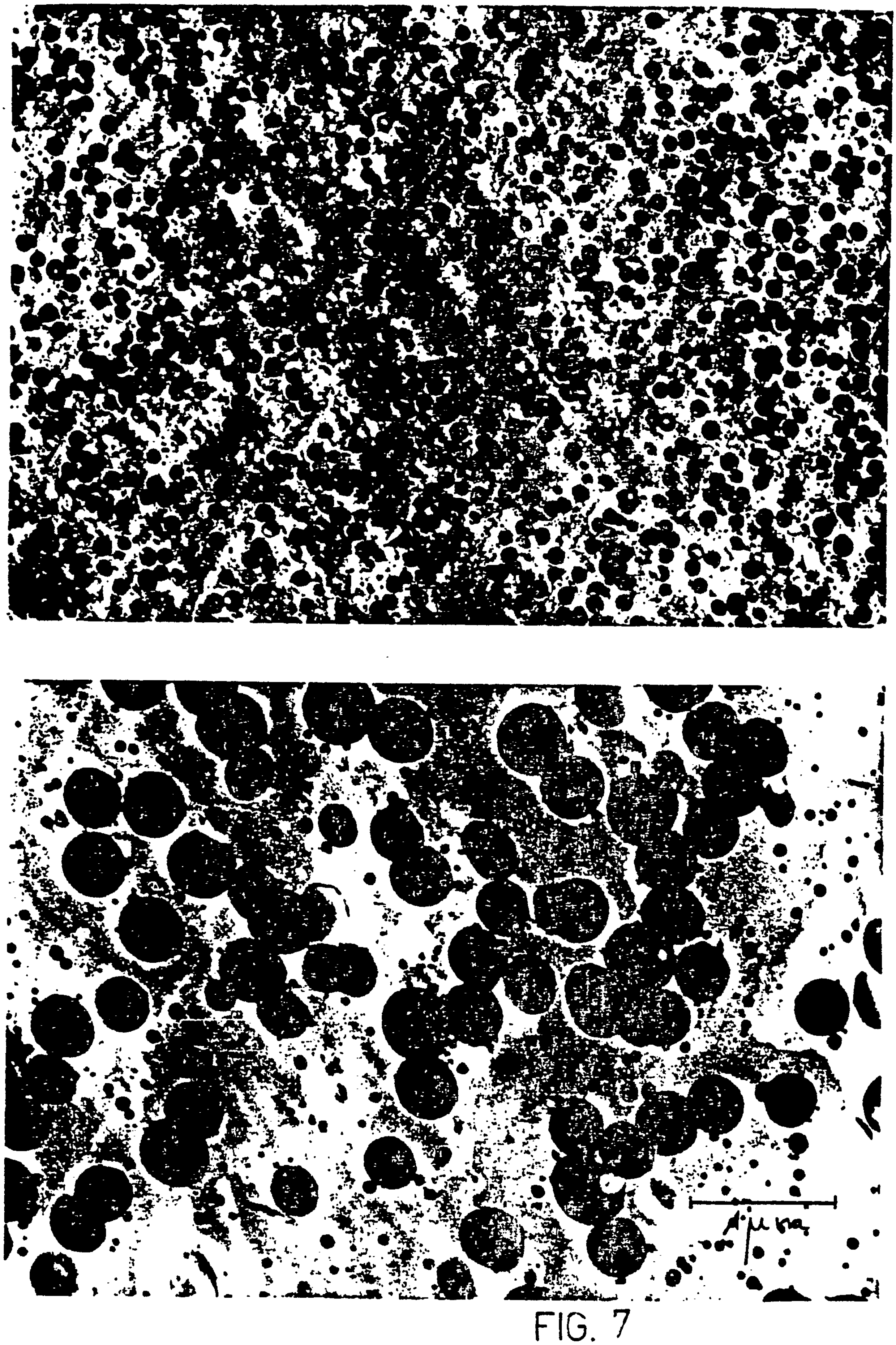


FIG. 7

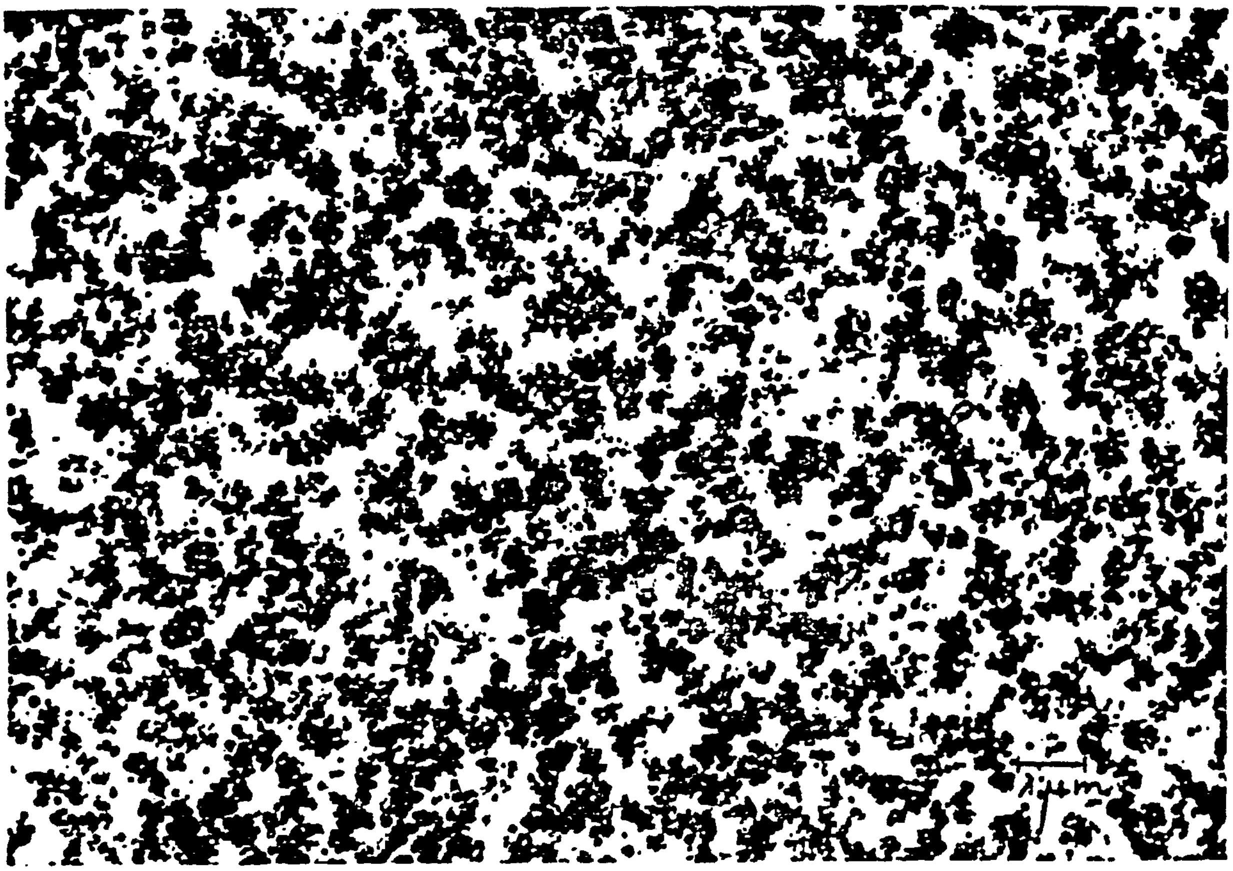


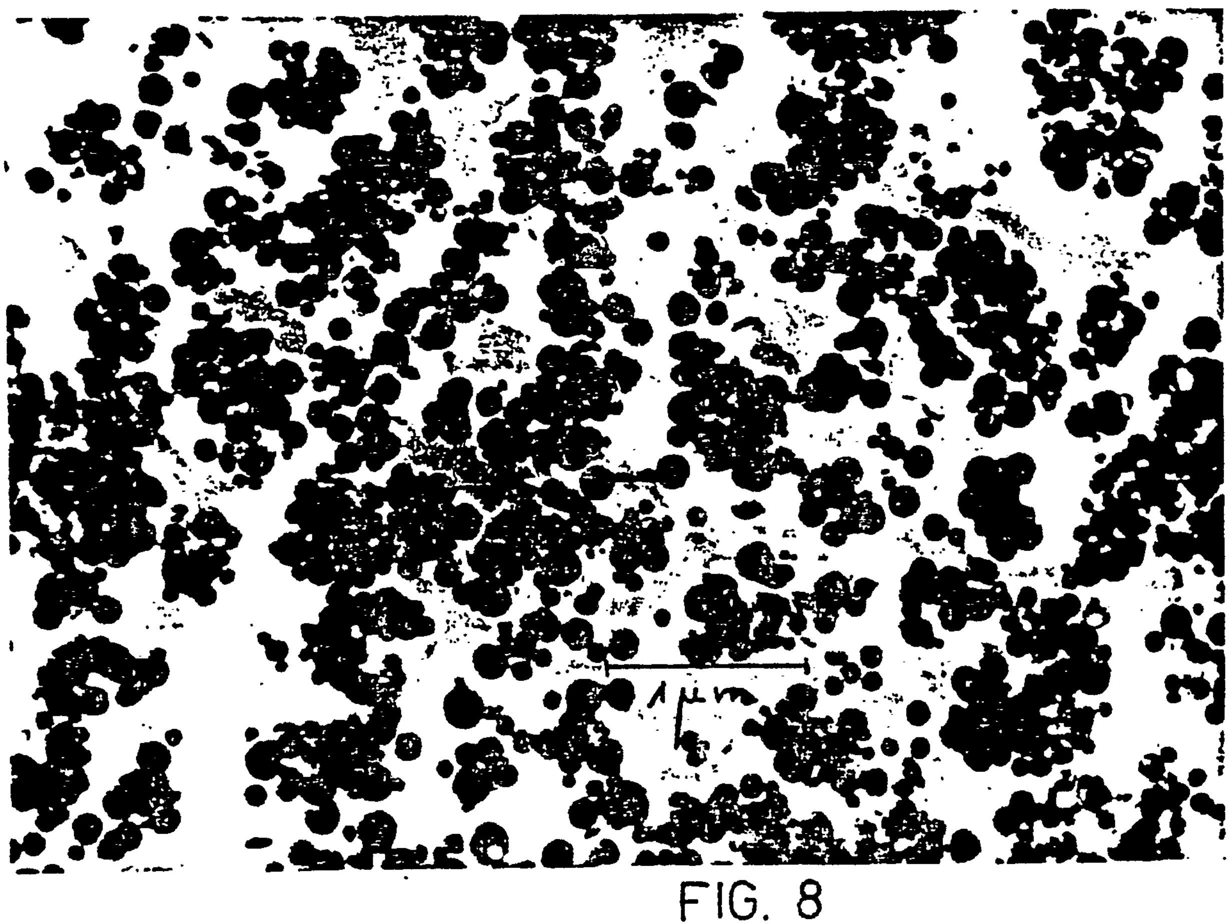


FIG. 8

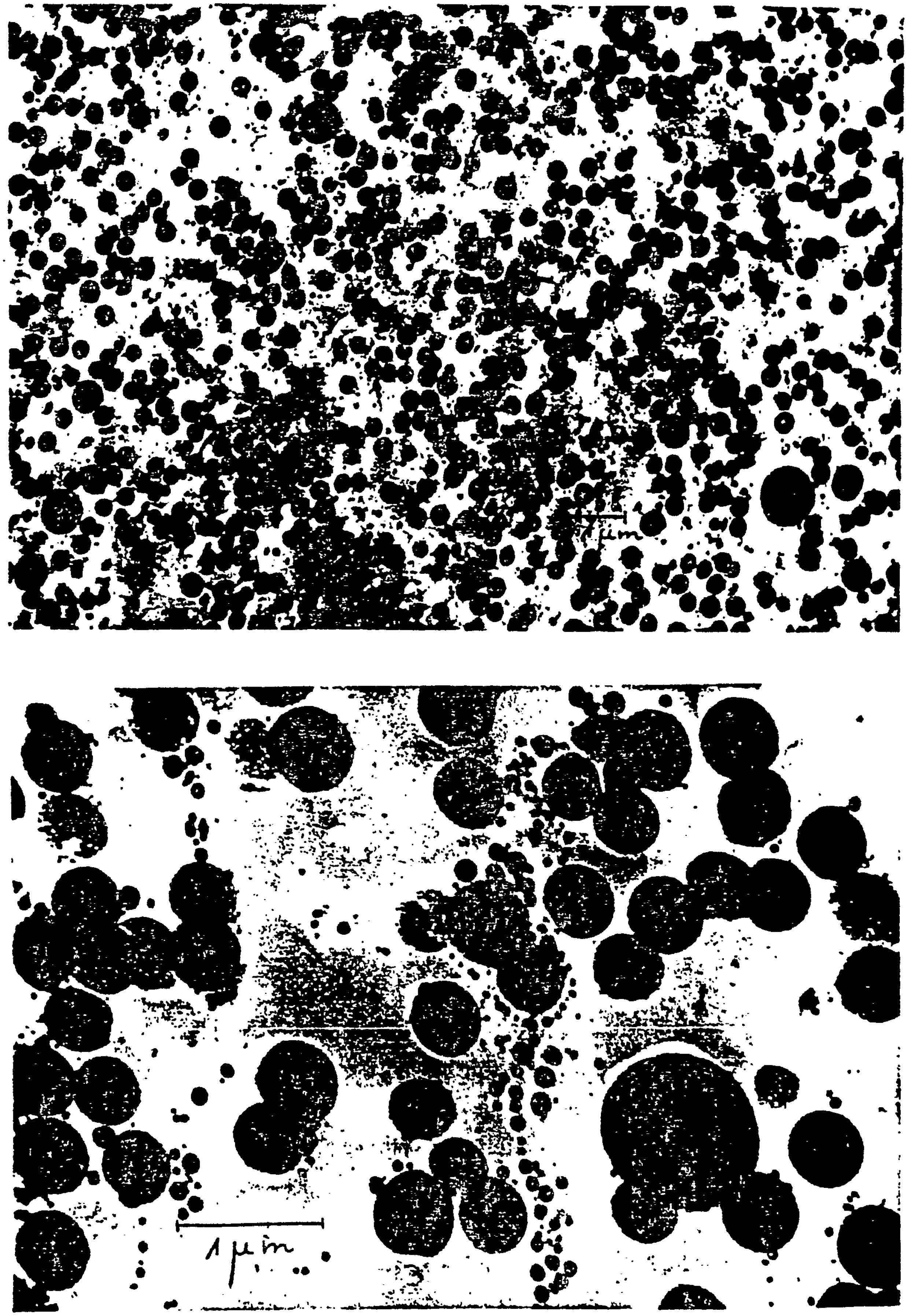


FIG. 9